# EUROPEAN PATENT APPLICATION

(11) **EP 4 566 796 A1**
(43) Date of publication of application: **11.06.2025**
(21) Application number: 23214308.1
(22) Date of filing: 05.12.2023
(51) Int. Cl.: B29C 64/106, B29C 64/264, B29C 64/277

(54) **AN APPARATUS FOR VOLUMETRIC FORMING OF AN OBJECT AND A METHOD FOR CONTROLLING VOLUMETRIC FORMING OF AN OBJECT**

(71) Applicant: Imec VZW, 3001 Leuven (BE)
(72) Inventor: DICTUS, Dries, 3010 Kessel-Lo (BE); PETERSEN, John, 3000 Leuven (BE); ROTTENBERG, Xavier, 3010 Kessel-Lo (BE)
(74) Representative: AWA Sweden AB

(57) **Abstract**

An apparatus (100) for volumetric forming of an object (10) comprises: a controllable three-dimensional light field generator (110) configured to receive a light beam incident on the light field generator (110) and to form a three-dimensional light field based on diffraction of the incident light beam, wherein the light field generator (110) is controllable for dynamically changing an optical property for changing a distribution of the three-dimensional light field; a container (130) for holding a formable material (12), wherein the light field generator (110) is configured to output the three-dimensional light field into the container (130) such that the distribution of the three-dimensional light field controls photo-induced formation of the object (10) simultaneously in three dimensions; wherein the light field generator (110) is controllable for controlling local intensity of the three-dimensional light field in the formable material (12) so as to control a size and shape of the object (10).

## Description

### Technical field

The present description relates to forming of a three-dimensional object. In particular, the present description relates to an apparatus for volumetric forming of an object. The present description also relates to a method for controlling volumetric forming of an object.

### Background

Additive manufacturing, also called three-dimensional printing, relates to construction of a three-dimensional object based on a digital three-dimensional model of the object. Typically, the object is formed layer by layer or point by point. A point of the object may be referred to as a pixel or voxel.

However, present manufacturing processes are still relatively slow. Also, there are limitations of available shapes and sizes of the objects, since there is a need for a support structure holding the object that is being manufactured.

Full volumetric imaging processes using tomographic techniques are known for defining the object to be formed. However, such processes are limited in resolution and consume reactants in unwanted volumes that may also lead to forming unwanted artifacts, image process drift requiring dynamic correction, and loss of reactants.

### Summary

An objective of the present description is to enable forming of a three-dimensional object in a fast manner and with a high degree of freedom of shapes of the object. In addition, an objective of the present description is to enable forming of the three-dimensional object with a very high resolution, even below an optical resolution limit, without unwanted consumption of reactants.

This and other objectives are at least partly met by the invention as defined in the independent claims. Preferred embodiments are set out in the dependent claims.

According to a first aspect, there is provided an apparatus for volumetric forming of an object, said apparatus comprising: a controllable three-dimensional light field generator, wherein the light field generator is configured to receive a light beam incident on the light field generator and to form a three-dimensional light field based on diffraction of the incident light beam, wherein the light field generator is controllable for dynamically changing an optical property of the light field generator for dynamically changing a distribution of the three-dimensional light field; a container for holding a formable material, wherein the light field generator is configured to output the three-dimensional light field into the container such that the distribution of the three-dimensional light field controls photo-induced formation of the object simultaneously in three dimensions within the formable material; wherein the light field generator is controllable for controlling local intensity of the three-dimensional light field in the formable material so as to control a size and shape of the object to be formed in three dimensions by exposure to the three-dimensional light field.

Thanks to the apparatus according to the first aspect, a light field is controlled in three dimensions, such that the distribution of light intensity of the three-dimensional light field may be provided in such manner that an object can be formed in three dimensions simultaneously. This implies that the object need not be built up layer by layer. Rather, the entire object in three dimensions or at least a three-dimensional portion of the object to be formed may be defined in a single exposure to the three-dimensional light field. Hence, the object may be very quickly formed. This also implies that the shape of the object may be freely chosen, since the object may be defined in three dimensions simultaneously and is therefore not constrained to the object being built to add material to already existing structures.

The distribution of the three-dimensional light field defines a variation of light intensity in three dimensions. Thus, the three-dimensional light field may define local light intensity in a number of points of the three-dimensional light field. The local light intensity may be controlled such that the intensity may be sufficient to cause formation of the object in the local point if it is to form part of the object.

In other words, the three-dimensional light field may be patterned in three dimensions within the formable material. This implies that in each dimension, the three-dimensional light field defines a pattern. The three-dimensional light field can be controlled such that the pattern in each dimension has a variation in light intensity, i.e., the pattern does not have a constant light intensity level.

It should be realized that the term "three-dimensional light field generator" refers to a generator which is configured to generate a three-dimensional light field. Thus, the term "three-dimensional" is an attribute of the light field. The terms "three-dimensional light field generator" and "light field generator" are used interchangeably hereinafter.

The light field generator may be formed by any component, which can form a three-dimensional light field in a controlled manner based on diffraction of light. The light field generator may thus be configured to receive an incident light beam and output the three-dimensional light field in response to receiving the incident light beam.

The light field generator may interact with the incident light beam for forming the three-dimensional light field. The light field generator is configured to provide diffraction of the incident light beam, such that diffraction of the incident light beam will form the three-dimensional light field. The light field generator may thus affect propagation of the incident light beam to form the three-dimensional light field. The light field generator may be configured to interact with the incident light beam in a cross-section of the incident light beam. The light field generator may be controlled such that interaction of the light field generator with the incident light beam varies over the cross-section. This implies that a different effect is provided with different portions of the incident light beam such that the three-dimensional light field may be formed having a varying distribution of light intensity in three dimensions.

The three-dimensional light field generator is controllable. This implies that a variation of interaction with light provided by the three-dimensional light field generator over the cross-section of the incident light beam may be controlled. The light field generator may provide an optical property that varies over the cross-section of the incident light beam. The light field generator is controllable such that the optical property is dynamically changed, providing a change in the variation of the optical property over the cross-section.

The optical property may for instance be a complex refractive index or a complex permittivity of the light field generator.

The light field generator may be configured to interact with the incident light beam such that an overall effect on the incident light beam may be provided based on a spatial variation of the optical property of the light field generator for forming the three-dimensional light field.

The incident light beam may provide well-defined characteristics. Thus, the incident light beam may be provided from a light source that may be accurately controlled in order to define characteristics of the incident light beam. For instance, the incident light beam may be formed by temporally and/or spatially coherent light. This implies that a spatial variation of the optical property of the light field generator may provide a well-defined effect on the incident light beam.

The apparatus provides a well-defined relation between the three-dimensional light field generator and a container in which the formable material, from which the object is to be formed, can be arranged. Thus, the three-dimensional light field is output in a well-defined manner into the formable material when this is arranged in the container.

The container may define a spacing in which the formable material is arranged. Thus, the container may comprise walls surrounding the spacing and may for instance be arranged to surround the spacing on three sides. The container may define an opening through which the three-dimensional light field may enter into the spacing so as to illuminate the formable material. However, the container may also or alternatively be transparent such that the three-dimensional light field may pass through a wall of the container into the formable material.

The container may be configured to receive the formable material through a material opening which may be the same opening through which the three-dimensional light field may also be passed into the formable material. However, the material opening may alternatively be a different opening and the material opening may also be configured to be closed before the object is to be formed and to be opened for removing the object after it has been formed. The container may alternatively be provided with a channel leading into the spacing, such that the formable material may be introduced into the spacing through the channel and the object may also be removed through the channel after it has been formed.

The apparatus may be configured to form an object in a formable material that may be formed into a solid shape based on being illuminated by light. The light of the three-dimensional light field may thus react with the formable material for causing photo-induced formation of the object. This may be achieved by the absorption of light providing an energy into the formable material which may cause generation of reactants in the formable material, which may further cause a reaction to occur such that a solid shape is defined. For instance, the formable material may comprise a substance that can react to light of the specific wavelength or energy called a photo-activator. The photo-activator may be a photo-initiator which may react to light, such as absorb light to bring the photo-activator into an excited state, in order to generate a reactive species. The photo-activator may alternatively be a photo-sensitizer which may react to light, such as absorb light to bring the photo-activator into an excited state, in order to induce a chemical and/or physical alteration to another chemical entity. The formable material may further comprise a second substance that can polymerize based on the reactive species or the chemical entity with chemical and/or physical alteration. For instance, the reaction to light by the photo-activator may cause sufficient polymerization of the second substance such that a solid object is formed.

Thanks to the three-dimensional light field providing a well-controlled distribution of light in three dimensions, the apparatus may accurately control light intensity in three dimensions simultaneously. This may be used for controlling photo-induced formation of the object simultaneously in three dimensions.

The object could be formed by a single exposure of the formable material to the three-dimensional light field for an appropriate period of time in order to allow the object to be formed. However, it should be realized that the object could be formed based on a plurality of exposures of the formable material. For instance, even though the apparatus may provide simultaneous formation in three dimensions, a single exposure may be used for forming only a portion of the object, such that a sequence of exposures may be used for building up a total object. This may be used if a large object is to be formed.

Multiple exposures may also or alternatively be used when resolution of an object is to be defined based on overlap between light fields of the multiple exposures. Using multiple exposures, three-dimensional light fields of the multiple exposures may be interlaced such that a super-resolution of the object may be achieved. This implies that the resolution of the object can be smaller than optical resolution limits for a single exposure, such that the resolution of the object may even be smaller than half of a wavelength of the light.

Also, a combined effect of a plurality of exposures of the formable material may be used. The control of the object being formed in the formable material may be based on activation light which may bring a photo-initiator to an excited state which may cause generation of reactants that may further initiate forming of the solid object. However, the apparatus may further be configured to provide deactivation light that may cause the photo-initiator to be brought back from the excited state to a lower energy state or which may cause reactants for initiating forming of the solid object to be consumed. Thus, the forming of the object may be controlled by providing a sequence of exposures, where the exposures have different effects. For instance, the energy provided in one or more exposures may be used for selectively inhibiting formation of the object, which may be followed by exposure(s) for activating forming of the object in the uninhibited volume. As yet another alternative, an exposure for selectively inhibiting formation of the object may be simultaneous with an exposure for activating forming of the object in the uninhibited volume.

It should thus be realized that the three-dimensional light field may control a size and shape of the object to be formed by selectively controlling where formation of the object may occur, but the three-dimensional light field may alternatively control a size and shape of the object to be formed by selectively controlling where formation of the object may not occur (by inhibiting formation of the object).

The three-dimensional light field generator may be controllable in order to control the three-dimensional light field being output in a sequence of exposures of the formable material for forming the object. Thus, the controlling of the three-dimensional light field generator may be used in order for controlling a single object being formed.

However, the three-dimensional light field may also or alternatively be controllable for controlling the three-dimensional light field being output for forming different objects. Thus, the apparatus may be used for forming objects, wherein the size and shape of the objects may be dynamically defined by how the light field generator is controlled. Thus, the apparatus may be used for providing a large flexibility in the size and shape of the object to be formed.

According to an embodiment, the light field generator comprises an array of individually addressable elements, wherein each element is smaller than a wavelength, such as, but not limited to, smaller than half of a wavelength, of the incident light beam, and wherein each element is controllable for controlling an optical property of the element.

This implies that the light field generator may be accurately controlled for forming the three-dimensional light field. The individually addressable elements may ensure that an overall three-dimensional light field may be controlled with a high resolution, such as a resolution smaller than the wavelength of light of the incident light beam.

The individually addressable element may be controlled based on a control signal for controlling the optical property of the element. It should be realized that the control signal may be provided in different manners. The control signal could for instance be an electrical signal for controlling the optical property of the element.

The individually addressable element may for instance comprise a phase change material, which may be controlled so as to cause a phase change between a first state and a second state. The phase change material may for instance be arranged in the individually addressable element so as to alter a wavelength-dependency of resonance in a resonance defining layer, which may cause a phase change of the phase change material. This may in turn imply that the optical property of the element is changed.

The phase change material may be configured to switch between a crystalline state and an amorphous state. However, it should be realized that the first and second states may be other configurations of states of the phase change material. For instance, the phase change material may be configured to switch between two different crystalline states.

The individually addressable elements may be arranged such that phase change material associated with different elements is separated from each other. Thus, a phase change material may be patterned to form isolated parts of the phase change material in different elements.

The control signals may be configured to control the optical property by thermally switching a state of a phase change material.. The phase change material may thus be a solid-state phase change material. It should be realized that in different embodiments, electro-optic materials, and magnetooptic materials may be used as alternative implementations, for controlling the optical property of the individually addressable elements.

In some embodiments, the array of individually addressable elements may be controlled so as to change a spatial relationship between the addressable element and the incident light beam. This may for instance include using piston-driven phase light modulators, liquid crystal phase light modulators, digital micromirror devices, or electro-acoustic modulators.

According to an embodiment, each element is controllable for controlling a modulation of amplitude, phase and/or polarization of the incident light beam by the element.

Thus, modulation of the incident light beam may be individually controlled in a plurality of individually addressable elements. The array of individually addressable elements may thus be used for providing an overall modulation of the incident light beam so as to enable controlling the three-dimensional light field in three dimensions. This may be achieved by interference of different portions of the light beam being subject to different modulations, so as to define the distribution of the light field in three dimensions.

The light field generator may be configured to transmit the incident light beam through the light field generator. Thus, the light field generator may be configured to receive the incident light beam at a first surface and to output the three-dimensional light field from a second surface, opposite to the first surface.

However, the light field generator may alternatively be configured to reflect the incident light beam. It should be realized that a transmissive or a reflective set-up may be chosen depending on requirements of the apparatus, such as how the light field generator should suitably be arranged in relation to the container.

It should be realized that the light field generator may be formed as a planar structure. If the light field generator is configured to transmit the incident light beam, the light field generator may be thin in order to reduce losses of light in transmission through the planar structure. The light field generator may comprise a planar surface on which the light beam is incident, and the array of individually addressable elements may be formed at the planar surface for interacting with the incident light beam.

According to an embodiment, the apparatus further comprises an additional controllable three-dimensional light field generator configured to receive an additional light beam incident on the additional light field generator and to form an additional three-dimensional light field based on diffraction of the incident additional light beam, wherein the additional light field generator is controllable for dynamically changing an optical property of the additional light field generator for dynamically changing a distribution of the additional three-dimensional light field; wherein the additional light field generator is configured to output the additional three-dimensional light field into the container, wherein the three-dimensional light field and the additional three-dimensional light field together control photo-induced formation of the object.

Thus, the apparatus may comprise at least two controllable three-dimensional light field generators. This may be utilized in various manners for providing a desired effect on the formable material for forming of the object.

For instance, the at least two controllable three-dimensional light field generators may be used for providing three-dimensional light fields from different directions into the formable material. The three-dimensional light fields may interfere in the formable material and the use of two (or more) three-dimensional light fields may enable controlling resolution of a combined three-dimensional light field in an even more accurate manner than what may be possible using a single light field generator. In particular, the two or more three-dimensional light fields may provide a super-resolution for controlling forming of the object, such that resolution of the formed object may be smaller than half of a wavelength of light.

The at least two controllable three-dimensional light field generators may be configured to output the three-dimensional light fields into different parts of the formable material, such that the plurality of three-dimensional light field generators may facilitate causing photo-induced formation of the object in a large volume defined by the plurality of three-dimensional light fields.

Thus, each light field generator may be configured to receive an incident light beam of a same wavelength of light. The light beams may be formed by one or more light sources.

The light field generators may be used for simultaneously or sequentially outputting the three-dimensional light fields into the formable material.

The light field generators may be configured to receive incident light beams of different wavelengths of light or different polarization of light. Different wavelengths or polarization of light may have different effects on the formable material. By providing three-dimensional light fields of different wavelengths and/or polarization, a combined effect of the three-dimensional light fields may be used for controlling photo-induced formation of the object. This may facilitate a more accurate control of the formation of the object, such that the object may be formed with a high resolution.

A combined effect of three-dimensional light fields may be obtained using a single three-dimensional light field generator, which is controlled to sequentially output the three-dimensional light fields. However, the three-dimensional light field generator may require a switching time between subsequent three-dimensional light fields being output for switching the three-dimensional light field generator in order to control the output of the three-dimensional light fields. The required switching time may in some instances not be sufficiently short to allow forming of an object with high resolution. Thus, in some embodiments, the plurality of light field generators may be advantageously used for allowing forming of objects with high resolution.

By having a plurality of light field generators, each light field generator may be dedicated for use with a particular wavelength or polarization of light. This may allow accurate control of the three-dimensional light field formed by the respective light field generator. However, it should be realized that even if two or more wavelengths and/or polarizations of light are used in the formation of the object, a single light field generator may be used for forming the three-dimensional light field(s).

According to an embodiment, the light field generator is configured to output a three-dimensional light field of deactivation light providing a three-dimensional distribution of the deactivation light for causing local inhibition of forming of the object in the formable material.

The photo-induced formation of the object may be caused by bringing a photo-activator in the formable material from a lower energy state to a higher energy state. For instance, a photo-initiator may be brought to a higher energy state at which the photo-initiator may cause generation of reactants, which may further cause the formable material to be solidified. However, the formable material may also be configured to absorb light to trigger the photo-initiator to be brought back to the lower energy state (e.g., a ground state of the photo-initiator). The light used for bringing the photo-initiator back to the lower energy state may be referred to as deactivation light. Deactivation of the formable material using light for bringing the photo-initiator back to the lower energy state is advantageous in that no consumption of reactants is caused by the deactivation light and the formable material is not changed by the deactivation light.

However, according to an alternative, the deactivation light may cause inhibition of forming of the object by the deactivation light being absorbed by a photo-inhibitor which, in response to reacting to light, may consume reactants involved in process of forming the object. According to yet another alternative, the deactivation light may cause re-arrangement of the photo-initiator to a different molecular geometry, which is non-reactive and will not react with reactants in the formable material.

The deactivation light may be used for preventing undesired formation of artifacts in the formable material due to light passing or scattering through a part of the formable material that is not intended to be solidified.

For instance, if the three-dimensional light field for activating the photo-activator in the formable material is converging into a focus point, a background signal may be defined in other parts of the formable material that are not to be solidified. The intensity of deactivation light may be set such that the deactivation energy ensures that a background signal does not cause the formable material to solidify. Thus, if energy of the background signal is 30% of the energy in locations at which the formable material is to solidify, the deactivation light may be set to correspond to the 30% background signal for suppressing the effect of photo-activators being excited in undesired locations.

Thus, by using the deactivation light, the apparatus may further control locations in which the formable material is to be solidified. It should be realized that, in each location to be solidified, a large number of photo-activators, such as photo-initiators, may be present. The formable material may be configured to solidify only when a sufficient fraction of the photo-initiators in the location have been brought to the higher energy state at which the reactants may be generated by the photo-initiators for causing the formable material to solidify. Thus, using deactivation light, the fraction of molecules in the lower energy state may be increased and, hence, the amount of energy needed for causing the formable material to be solidified at the location increases.

It should be realized that the apparatus may be configured to output a patterned three-dimensional light field of deactivation light, such that the distribution of the deactivation energy is varied within the formable material. This may be combined with the apparatus being configured to output unpatterned light for activating a photo-activator in the formable material to cause photo-induced formation of the object. Thus, the deactivation light may be used for controlling the locations in which the formable material will solidify, whereas unpatterned light (equal or almost equal intensity throughout the volume of the formable material) may be used for activating the photo-activator in the formable material, such that the photo-activator may further provoke or modify a chemical reaction causing the object to be formed.

However, it should be realized that deactivation light and light for activating the photo-activator in the formable material to cause photo-induced formation of the object may both be provided in patterned three-dimensional light fields, simultaneously or sequentially, in the formable material. The three-dimensional light fields may be interlaced to provide a super-resolution for controlling forming of the object, such that resolution of the formed object may be smaller than half of a wavelength of light.

As yet another alternative, the deactivation light may be unpatterned, whereas the light for activating the photo-activator to cause photo-induced formation of the object may be patterned to form a three-dimensional light field controlling photo-induced formation of the object.

The unpatterned light may be provided by light from a light source being used for illuminating the formable material, without the light interacting with a three-dimensional light field generator for controlling the three-dimensional light field. The unpatterned light may be provided directly from the light source or via one or more optical components, such as a lens for expanding a light beam.

The deactivation light may, according to yet another alternative, be both patterned and unpatterned. For instance, the deactivation light may be output in a plurality of exposures and/or simultaneous exposure being defined in plural manners. The unpatterned deactivation light may for instance be used for setting a background signal for avoiding undesired artifacts in the formable material, whereas the patterned deactivation light may be used for controlling resolution of the object to be formed.

It should further be realized that molecules in the formable material may have different likelihood of absorbing deactivation light and light for activating the formable material to cause photo-induced formation of the object. Thus, the energy needed to cause the formable material to be solidified at a location may not be increased exactly by the deactivation energy provided in the location.

According to an embodiment, the light field generator is configured to output the three-dimensional light field providing the three-dimensional distribution of deactivation light, wherein the distribution of deactivation light comprises an intensity gradient defining a decreasing intensity along a direction of propagation of light from the light field generator.

Light propagating through the formable material may attenuate, e.g., due to absorption, while propagating through the formable material. Thus, the formable material may be exposed to lower intensity of light in locations far into the formable material. The deactivation energy may be used for ensuring that an effective exposure rate of light for causing the formable material to solidify is similar throughout the volume of the formable material. Thanks to using an intensity gradient of the deactivation energy with a decreasing intensity along the direction of propagation of light, the apparatus may ensure that the object may be formed with a common accuracy throughout the formable material, in particular, in locations extending far into the formable material as seen from the light field generator.

It should be realized that the deactivation light comprising an intensity gradient need not necessarily be used. Thus, in any embodiments generally discussing deactivation light below, the deactivation light may comprise, but need not necessarily comprise, an intensity gradient.

According to an embodiment, the apparatus is further configured to output activation light, wherein deactivation light comprises a first wavelength and activation light comprises a second wavelength different from the first wavelength, wherein the apparatus is configured to output a three-dimensional light field of activation light into the container providing a three-dimensional distribution of activation energy to the formable material, wherein the activation light is configured to cause a photo-activator to react with the activation light for further provoking or modifying a chemical reaction causing formation of the object in the formable material.

The light used for activating the photo-activator so as to provoke or modify a chemical reaction that causes formation of the object in the formable material is referred to as activation light.

The apparatus may be configured to output a three-dimensional light field of activation light into the formable material as well as to output a three-dimensional light field of deactivation light into the formable material. The activation light and the deactivation light may thus be used together for accurately controlling the forming of the object.

It should also be realized that, in some embodiments, no deactivation light is used and only activation light is used for controlling photo-induced formation of the object.

According to an embodiment, the apparatus is further configured to output pre-activation light, wherein pre-activation light comprises a third wavelength different from the first and second wavelength, wherein the apparatus is configured to output a three-dimensional light field of pre-activation light into the container providing a three-dimensional distribution of pre-activation energy to the formable material, wherein the pre-activation light is configured to cause pre-activation of the photo-activator in the formable material to allow the photo-activator to absorb activation light for causing photo-induced formation of the object in the formable material.

The photo-activator may have an intermediate energy state between a lower energy state and a higher energy state at which the photo-activator may provoke or modify a chemical reaction causing the formable material to be solidified. Thus, the photo-activator may be configured to absorb pre-activation light to trigger the photo-activator to be brought from the lower energy state to the intermediate energy state. Further, the photo-activator may only be able to absorb activation light for bringing the photo-activator from the intermediate energy state to the higher energy state. Thus, use of pre-activation light may further control photo-induced formation of the object.

The pre-activation light may alternatively be configured in another manner for providing a control of allowing the photo-activator to absorb activation light. For instance, the pre-activation light may cause a molecule in the formable material to be re-arranged allowing absorption of activation light. According to an alternative, the pre-activation light may cause a change in polarity of a chemical environment in the formable material so as to cause the photo-activator to become active for allowing the photo-activator to absorb activation light.

The apparatus may be configured to use pre-activation light and activation light for controlling photo-induced formation of the object. Thus, the apparatus may be configured to use pre-activation light and activation light without using deactivation light. However, the apparatus may alternatively be configured to use a combination of pre-activation light, activation light, and deactivation light.

The apparatus may be configured to output a patterned three-dimensional field of each of the pre-activation light, activation light and deactivation light. However, one or more of the pre-activation light, activation light and deactivation light may alternatively be unpatterned. As a further alternative, the apparatus may be configured to output both patterned and unpatterned light of a particular type, such as patterned and unpatterned deactivation light.

The three-dimensional light fields of pre-activation light, activation light and/or deactivation light may be interlaced to provide a super-resolution for controlling forming of the object, such that resolution of the formed object may be smaller than half of a wavelength of light.

It should be realized that the third wavelength of pre-activation light may be different from the second wavelength of activation light. However, the pre-activation light need not necessarily have a different wavelength from the activation light. Thus, according to an alternative embodiment, the third wavelength may be equal to the second wavelength. This implies that the pre-activation light may be configured to trigger the photo-activator to be brought from the lower energy state to the intermediate energy state using the third wavelength, wherein activation light may be configured to trigger the photo-activator to be brought form the intermediate energy state to the higher energy state using the second wavelength being equal to the third wavelength.

According to an embodiment, the light field generator is configured to output a time-varying three-dimensional light field during exposure of the formable material to the three-dimensional light field.

The use of a time variation of the three-dimensional light field during exposure allows the apparatus to compensate for changes to propagation of light in the formable material during an exposure due to object being progressively formed in the formable material.

According to an embodiment, the light field generator is configured to output a plurality of exposures of the three-dimensional light field into the container, wherein the three-dimensional light fields of different exposures all define a same distribution corresponding to the shape and size of the object to be formed, wherein the three-dimensional light fields of different exposures define different background levels.

Thanks to using different background levels of different exposures, a ratio between light intensity in locations in which it is desired to cause the formable material to solidify and light intensity in locations in which the formable material should not solidify may be increased. Thus, this may be used for controlling forming of the object with a high accuracy, preventing formation of artifacts.

The plurality of exposures may be configured to output activation light so as to provide activation light with a high signal-to-noise ratio based on a combination of the plurality of exposures. The plurality of exposures may also advantageously be combined with the apparatus further being configured to output deactivation light. Thus, the deactivation light may ensure that a high intensity of activation light is required, at least in locations in which the formable material should not solidify, which provides an improved control of forming of the object. Then, the plurality of exposures with different background levels may ensure that the light intensity of activation light is sufficiently low in locations in which the formable material should not solidify. Hence, this provides an improved control of forming of the object and allows for improved control of preventing formation of artifacts.

The three-dimensional light fields of different exposures may be interlaced to provide a super-resolution for controlling forming of the object, such that resolution of the formed object may be smaller than half of a wavelength of light.

According to an embodiment, the distribution of the three-dimensional light field has a resolution allowing forming of the object with a resolution smaller than 1 mm, such as smaller than 100 µm, such as smaller than 10 µm, such as smaller than 1 µm, such as smaller than 50 nm.

Thanks to the use of the three-dimensional light field generator, a very accurate control of features of the object may be provided. This implies that a high resolution of forming of the object is provided.

In particular, using multiple three-dimensional light fields that are interlaced, a super-resolution may be provided, which is not limited by optical resolution limits for a single exposure, such that the resolution of the object may even be smaller than half of a wavelength of the light.

According to an embodiment, the apparatus is configured to form an object with a resolution smaller than Abbe diffraction limit.

According to an embodiment, the distribution of the three-dimensional light field controls photo-induced formation of the object simultaneously in three dimensions in a volume of at least 1 mm x 1 mm x 1 mm.

The apparatus is configured to be used for simultaneously controlling photo-induced formation of the object in three dimensions. The apparatus allows control of photo-induced formation within a relatively large volume. However, it should be realized that the apparatus allows the object to be defined within a container having a volume of the formable material, but the volume does not necessarily define the size of the object. Rather, smaller objects may be formed within the volume thanks to the possibility to control the three-dimensional light field in three dimensions.

The controlling of formation of the object within a volume implies that a size of the volume in which the three-dimensional light field is controlled along a direction of a smallest dimension of the volume may be at least 1 mm. Hence, the volume may have different sizes in different dimensions perpendicular to the smallest dimension but may at least have a size of 1 mm in each dimension.

However, it should be realized that even though the apparatus enables formation of an object in three relatively large dimensions, the apparatus may also be used for forming smaller objects. For instance, the apparatus may be used for forming objects having a size in a direction of a smallest dimension that is smaller than 1 mm, such as smaller than 100 µm, smaller than 1 µm, or even smaller than 500 nm. The apparatus may be used for forming neuromorphic optical synapses or for forming photonic crystals, wherein small dimensions at least along one direction of the object may be used.

Thanks to the three-dimensional light field being controlled within a volume, wherein a size along a smallest dimension of the volume is at least 1 mm, it is also possible to control simultaneously forming of objects having a size in a smallest dimension of at least 1 mm.

It should be realized that the apparatus may be used for forming objects in larger volumes, such as in a volume wherein the size of the volume along a direction of the smallest dimension of the volume may be at least 1 cm. However, it should also be realized that the apparatus may also be used for forming objects of smaller sizes. In addition, even if the apparatus may not be able to simultaneously control photo-induced formation of the object in three dimensions in very large volumes (if a very large object is to be formed), the apparatus may still be utilized for forming large objects by sequential exposures of different parts of the formable material.

According to an embodiment, the apparatus further comprises a light source for forming the light beam incident on the light field generator.

Thus, the light source for forming the light beam incident on the light field generator may be part of the apparatus. This may ensure that a relation of the light beam to the light field generator may be accurately controlled. This may facilitate control of the apparatus.

However, it should be realized that light may be received from an external light source instead.

The apparatus may comprise a plurality of light sources when light of a plurality of wavelengths are to be used. Thus, each light source may be dedicated for generating light of a single wavelength.

According to an embodiment, the distribution of the three-dimensional light field controls photo-induced formation of the object by causing the formable material to form a solid object by polymerization, such as cross linking of monomers.

The apparatus may be configured to control photo-induced formation of the object of a formable material that may form a solid object by any of the above-mentioned processes. These are suitable manners of forming the object.

According to a second aspect, there is provided a method for controlling volumetric forming of an object, said method comprising: controlling an optical property of a controllable three-dimensional light field generator; receiving a light beam on the light field generator to form a three-dimensional light field based on diffraction of the incident light beam; outputting the three-dimensional light field into a formable material such that a distribution of the three-dimensional light field controls photo-induced formation of the object simultaneously in three dimensions within the formable material.

Effects and features of this second aspect are largely analogous to those described above in connection with the first aspect. Embodiments mentioned in relation to the second aspect are largely compatible with the first aspect.

Thanks to the method, a light field is controlled in three dimensions, such that the distribution of light intensity of the three-dimensional light field may be provided in such manner that control of forming of an object can be provided in three dimensions simultaneously. This implies that the object need not be built up layer by layer. Rather, the entire object in three dimensions may be defined in a single exposure to the three-dimensional light field. Hence, the object may be very quickly formed. This also implies that the shape of the object may be freely chosen, since the object may be defined in three dimensions simultaneously and is therefore not constrained to the object being built to add material to already existing structures.

According to an embodiment, the outputted three-dimensional light field is formed by deactivation light providing a three-dimensional distribution of the deactivation light causes local inhibition of forming of the object in the formable material, wherein the method further comprises outputting a three-dimensional light field of activation light into the formable material providing a three-dimensional distribution of activation energy to the formable material, wherein the activation light is configured to cause photo-induced formation of the object in the formable material, wherein deactivation light comprises a first wavelength and activation light comprises a second wavelength different from the first wavelength.

Thus, the method may use a pattern of a three-dimensional distribution of deactivation light for controlling forming of the object. The deactivation light may be combined with activation light which causes photo-induced formation of the object. The activation light may form a patterned three-dimensional distribution of light but may alternatively be unpatterned light being output in three dimensions in the formable material.

The use of patterned three-dimensional light fields of both deactivation light and activation light may be used for controlling a combined resolution for forming of the object, which has a higher resolution than individual resolution of the three-dimensional light fields.

According to an embodiment, the method further comprises outputting a three-dimensional light field of pre-activation light into the formable material providing a three-dimensional distribution of pre-activation energy to the formable material, wherein the pre-activation light is configured to cause pre-activation of the formable material for allowing activation light to be absorbed to cause photo-induced formation of the object in the formable material, wherein pre-activation light comprises a third wavelength, different from the first and second wavelengths.

The formable material may comprise a photo-activator, which may have an intermediate energy state between a lower energy state and a higher energy state at which the photo-activator may provoke or modify a chemical reaction causing the formable material to be solidified. Thus, the photo-activator may be configured to absorb pre-activation light to trigger the photo-activator to be brought from the lower energy state to the intermediate energy state. Further, the photo-activator may only be able to absorb activation light for bringing the photo-activator from the intermediate energy state to the higher energy state. Thus, use of pre-activation light may further control photo-induced formation of the object.

The additional use of a patterned three-dimensional light field of pre-activation light may be used for further controlling a combined resolution for forming of the object. This may further facilitate providing control of forming of the object with a very high resolution.

According to a third aspect, there is provided an object formed by volumetric forming of the object by photo-induced formation in a formable material, wherein the object is formed without forming a supporting structure for carrying the object in the formable material and wherein the object is formed with a resolution smaller than 1 mm, such as smaller than 100 µm , such as smaller than 10 µm, such as smaller than 10 µm, such as smaller than 1 µm, such as smaller than 50 nm.

Effects and features of this third aspect are largely analogous to those described above in connection with the first and second aspects. Embodiments mentioned in relation to the third aspect are largely compatible with the first and second aspects.

Thanks to the use of the apparatus and method of the first and second aspects, an object may be freely formed. Thus, the object being manufactured may be formed without forming of a supporting structure. This implies that the object may be freely formed providing a high degree of freedom of the shape of the object. This also implies that the final object is free of any residues from being formed in relation to a supporting structure for holding the object during manufacturing.

The object has very high resolution features provided by the accurate manufacturing enabled by the apparatus and method of the first and second aspects. Thus, the object may have features smaller than 10 µm, such as smaller than 1 µm, such as smaller than 50 nm.

According to a fourth aspect, there is provided an object obtainable by the method of the second aspect, wherein the object is formed by the photo-induced formation in the formable material.

According to a fifth aspect, there is provided an apparatus for volumetric forming of an object, said apparatus comprising: a first three-dimensional light field generator, wherein the first light field generator is configured to receive a first light beam incident on the first light field generator and to form a first three-dimensional light field based on diffraction of the incident first light beam, wherein the first light field generator defines an optical property for controlling a distribution of the first three-dimensional light field; a second three-dimensional light field generator, wherein the second light field generator is configured to receive a second light beam incident on the second light field generator and to form a second three-dimensional light field based on diffraction of the incident second light beam, wherein the second light field generator defines an optical property for controlling a distribution of the second three-dimensional light field; a container for holding a formable material, wherein the first and second light field generators are configured to output the first and second three-dimensional light fields into the container such that the distribution of the three-dimensional light field controls photo-induced formation of the object simultaneously in three dimensions within the formable material; wherein the first and second light field generator control local intensity of the first and second three-dimensional light fields, respectively, in the formable material so as to control a size and shape of the object to be formed in three dimensions by exposure to the first and second three-dimensional light fields.

Effects and features of this fifth aspect are largely analogous to those described above in connection with the first, second, third, and fourth aspects. Embodiments mentioned in relation to the fifth aspect are largely compatible with the first, second, third, and fourth aspects.

According to the fifth aspect, the light field generators need not necessarily be dynamically controllable. Thus, the light field generators may be configured to always output the same first and second three-dimensional light fields. This may be used for manufacturing of large numbers of a particular object. The use of the light field generators may allow for manufacturing of the object with a high resolution.

The first and second light field generators may be formed according to any of the embodiments described above for the apparatus of the first aspect, except that the optical property of the light field generators may not be dynamically controlled.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of an apparatus for volumetric forming of an object according to an embodiment.
Fig. 2 is a schematic view of a three-dimensional light field generated by the apparatus.
Fig. 3 is an illustration of a first type of control used for photo-induced formation of the object.
Fig. 4 is an illustration of a second type of control used for photo-induced formation of the object.
Fig. 5 is an illustration of a third type of control used for photo-induced formation of the object.
Fig. 6 is a schematic view illustrating use of a three-dimensional light field in combination with a regular pattern of light for controlling photo-induced formation of the object according to an embodiment.
Figs 7a-d are schematic views illustrating use of activation light, deactivation light and/or pre-activation light for achieving super-resolution in forming of the object.
Fig. 8 is a flow chart of a method according to an embodiment.

### Detailed description

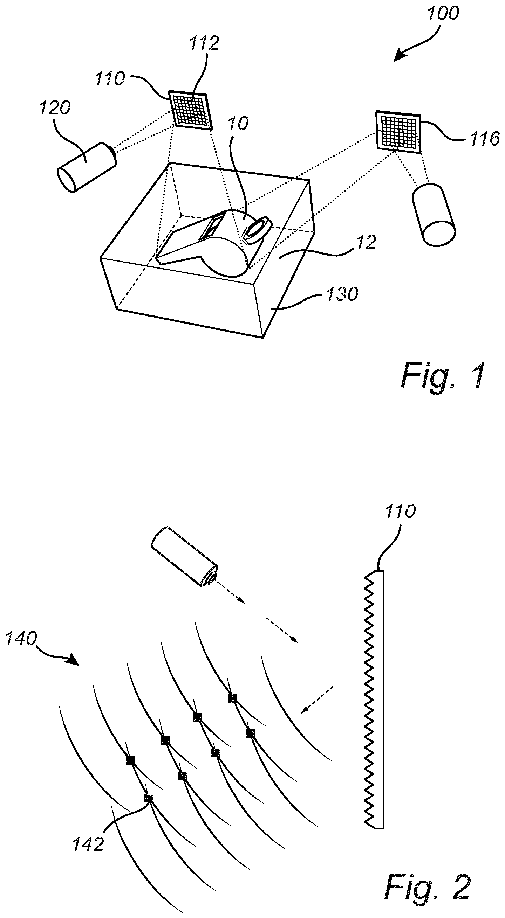

Referring now to Fig. 1, an apparatus 100 for volumetric forming of an object 10 will be described. The object is formed from a formable material 12 by photo-induced formation of the object 10 in the formable material.

The formable material 12 may comprise at least two substances forming a mixture from which a solid object 10 can be formed. The formable material includes a substance that is configured to reach with light. This substance may be a photo-activator, which may be configured to react to incident light for provoking or modifying a chemical reaction in a location in which the photo-activator reacts to light. The chemical reaction may then eventually lead to the solid object 10 being formed in the mixture. The mixture may further comprise a substance that is able to solidify for forming the object, for instance such substance may be a monomer.

Different types of chemical reactions leading to the solid object 10 may be utilized. Below some non-limiting examples explaining possible use of incident light for provoking or modifying chemical reactions will be provided.

The photo-activator may be a photo-initiator that may be configured to react to light so as to create a reactive species which may further cause the solid object to be formed. For instance, the photo-initiator may be configured to absorb light, such that energy from light illuminating the formable material 12 may be absorbed by the photo-initiator to bring the photo-initiator to form a photo-excited molecule. The photo-excited molecule may then initiate solidifying of the formable material 12 through electron transfer, proton transfer or energy transfer, for instance by the photo-excited molecule abstracting an electron or hydrogen atom from a donor molecule (a synergist). The donor molecule may then react with the monomer to initiate solidifying of the object 10.

The photo-activator may alternatively be a photo-sensitizer, which may be configured to react to light so as to induce a chemical and/or physical alteration to another chemical entity. In some cases, the photo-sensitizer may trigger or modify a chemical reaction.

The formable material 12 may, in addition to or alternatively to the photo-activator, also comprise a photo-inhibitor. The photo-inhibitor may be configured to react to light so as to prevent an object to be formed in the location in which the photo-activator reacts to light. For instance, the photo-inhibitor may be configured to, in response to reacting to light, consume reactants involved in process of forming the object 10. The photo-inhibitor may alternatively inhibit a process that is detrimental to the forming of the object, so as to aid forming of the object 10. Thus, the photo-inhibitor may be configured to mitigate undesired side-reactions by the photo-inhibitor reacting with one or more reactants of the side-reactions. Such side-reaction may for instance be oxygen poisoning, where oxygen in the mixture may induce quenching of a process for forming the object 10. The photo-inhibitor may thus be used to prevent oxygen poisoning, which may otherwise limit resolution and formation of small features of the object 10.

For instance, the solid object 10 may be formed by polymerization, such as cross linking of monomers. However, it should be realized that the object 10 may be formed in other manners and that the present description is not limited to a particular way of the object 10 being formed in the formable material 12 based on the formable material 12 being illuminated by light. It should be realized that the object 10 may even be formed by a solubility of the formable material 12 being selectively enhanced, such that the object 10 would be defined by portions of the formable material 12 for which the solubility is not enhanced.

The formable material 12 may for instance comprise a photo-initiator selected from a group of Norrish Type-II photoinitiators, such as 7-diethylamino-3-thenoylcoumarin (DETC), isopropylthioxanthone (ITX), and photochromic materials, such as spiropyrans, azobenzene, or triplet sensitizers like biacetyl, or benzil but not limited to these substances.

The formable material 12 may for instance comprise a monomer being an acrylate or a branched version thereof.

The apparatus 100 comprises a three-dimensional light field generator 110. The three-dimensional light field generator 110 is configured to receive an incident light beam and to form a three-dimensional light field. The three-dimensional light field generator 110 thus affects the incident light beam in a manner such that the three-dimensional light field is formed.

The three-dimensional light field generator 110 may be configured to provide a transfer function of light to define the output three-dimensional light field based on the incident light beam. The three-dimensional light field generator 110 enables forming a variation of intensity of the three-dimensional light field based on diffraction of the incident light beam. The three-dimensional light field may thus be patterned in three dimensions allowing local focus points of high light intensity to be formed in multiple locations in three dimensions.

The three-dimensional light field generator 110 is referred to as the light field generator 110 hereinafter for brevity.

The light field generator 110 comprises features defining an optical property of the light field generator 110. The light field generator 110 may be configured to provide a variation in the optical property across a plane, wherein the light field generator 110 is configured to receive the incident light beam onto the plane in which the optical property varies. Thus, different portions of the incident light beam are incident on different portions of the plane with different optical properties. Hence, the three-dimensional light field may thus be patterned in three dimensions by different portions of the incident light beam being affected by different optical properties.

The optical property may for instance be a complex refractive index or a complex permittivity.

The light field generator 110 may be controllable. This implies that the light field generator 110 may be controlled such that the three-dimensional light field being output may be dynamically changed. The light field generator 110 may be controllable for dynamically changing the optical property of portions of the light field generator 110 for dynamically changing a distribution of the three-dimensional light field.

The light field generator 110 may comprise an array of individually addressable elements 112. This allows the light field generator 110 to be controlled by changing the optical property of the individually addressable elements 112 so as to change an overall effect on the incident light beam. The individually addressable elements 112 of the array may together define the three-dimensional light field output by the light field generator 110.

Each element 112 may be smaller than a wavelength of the incident light beam, such as smaller than half of a wavelength of the incident light beam. This implies that the three-dimensional light field may be accurately controlled with high resolution. Each element 112 may be controllable for controlling the optical property of the element 112.

The light field generator 110 may for instance be formed by an array of unit cells as described in EP 3 521 912, which is incorporated in its entirety herein by reference. Thus, each element 112 may comprise a phase change material which may be used for controlling the optical property of the element 112.

According to an alternative, the light field generator 110 may comprise addressable elements which may be controlled so as to change a spatial relationship between the addressable element and the incident light beam. This may for instance include using piston-driven phase light modulators, liquid crystal phase light modulators, digital micromirror devices, or electro-acoustic modulators.

The optical property of the element 112 may be controlled using a control signal such that the optical property may be controlled by an electric signal. This may facilitate control of the light field generator 110.

Each element 112 may be controllable for controlling a modulation of amplitude, phase and/or polarization of the incident light beam by the element 112.

The apparatus 100 may comprise a light source 120 for forming the light beam that is incident on the light field generator 110. Alternatively, the light source may be external to the apparatus 100 and the apparatus 100 may be configured to receive light from the light source. The apparatus 100 may further comprise optical components for guiding and shaping the light beam to be incident on the light field generator 110.

The light source 120 may be configured to generate monochromatic light. The term light should not be narrowly construed. Thus, the monochromatic light may be visible light but need not necessarily be within a visible spectrum. Rather, the light source 120 may be configured to generate ultraviolet light or infrared light. The wavelength of light may be selected to fit an energy gap of the photo-initiator.

The incident light beam may be formed by coherent light. The coherence of light should be sufficient to fit tolerances of the three-dimensional light field to be formed. For instance, the light source 120 may be a laser light source for forming laser light. However, the light source 120 may alternatively be a light emitting diode (LED) or another source of monochromatic light. The light emitted by the light source 120 may be controlled or formed in many different manners for forming a suitable incident light beam on the light field generator 110. For example, the light emitted by the light source 120 may be collimated forming a plane wave front or guided through a pinhole to produce a spherical wave front for achieving at least partially coherent light incident on the light field generator 110.

The apparatus 100 further comprises a container 130 for holding the formable material 12. The light field generator 110 is arranged in relation to the container 130 such that the light field generator 110 may output the three-dimensional light field into the container 130 so as to illuminate the formable material 12 when arranged therein.

The container 130 may comprise walls transparent to the wavelength of light used such that the light may propagate through the walls of the container 130 into the formable material 12. Alternatively, the container 130 may have an opening through which light may be received into the formable material 12.

Reference is now made to Fig. 2, indicating a three-dimensional light field 140 being output into the formable material 12.

The apparatus 100 is configured to form the three-dimensional light field 140 in the formable material 12 to control photo-induced formation of the object 10 simultaneously in three dimensions. Thus, the apparatus 100 may provide the three-dimensional light field 140 having a distribution within the formable material 12 such that forming of the object 10 in the formable material 12 may be controlled to take place in desired locations in three dimensions at the same time. Thus, the apparatus 100 may provide a very fast manner of forming the object 10 as the size and shape in three dimensions may be controlled at the same time and even in a single exposure of light.

The three-dimensional light field 140 may define a pattern such that a local intensity of the three-dimensional light field 140 corresponds to the desired size and shape of the object. Hence, the local intensity of the three-dimensional light field 140 may be such that the object 10 will be formed only in the desired locations.

The apparatus 100 allows the three-dimensional light field 140 to be controlled with a very high accuracy allowing forming of the object 10 with a resolution smaller than 10 µm, such as smaller than 1 µm, such as smaller than 50 nm.

The apparatus 100 also allows the three-dimensional light field 140 to control formation of the object 10 simultaneously in three dimensions. The three-dimensional light field may for instance control formation of the object 10 extending in a volume of at least 1 mm x 1 mm x 1 mm, or in a volume wherein a smallest dimension is at least 1 mm. The three-dimensional light field 140 may also be used for controlling formation of the object 10 extending in a volume wherein a smallest dimension is at least 1 cm.

As shown in Fig. 2, the light field generator 110 allows defining local locations of high intensity of the three-dimensional light field 140, such that separate locations 142 may be defined in which the three-dimensional light field 140 may cause a reaction with the photo-activator and/or photo-inhibitor of the formable material 12 in the desired volume in which the object 10 is to be formed.

The locations 142 of high intensity of the three-dimensional light field 140 may further be separated by areas in the formable material 12 in which a substantially lower intensity of the three-dimensional light field 140 is provided. Thus, the three-dimensional light field 140 may be able to selectively induce a reaction with light in particular locations 142, which may further be defined with high resolution.

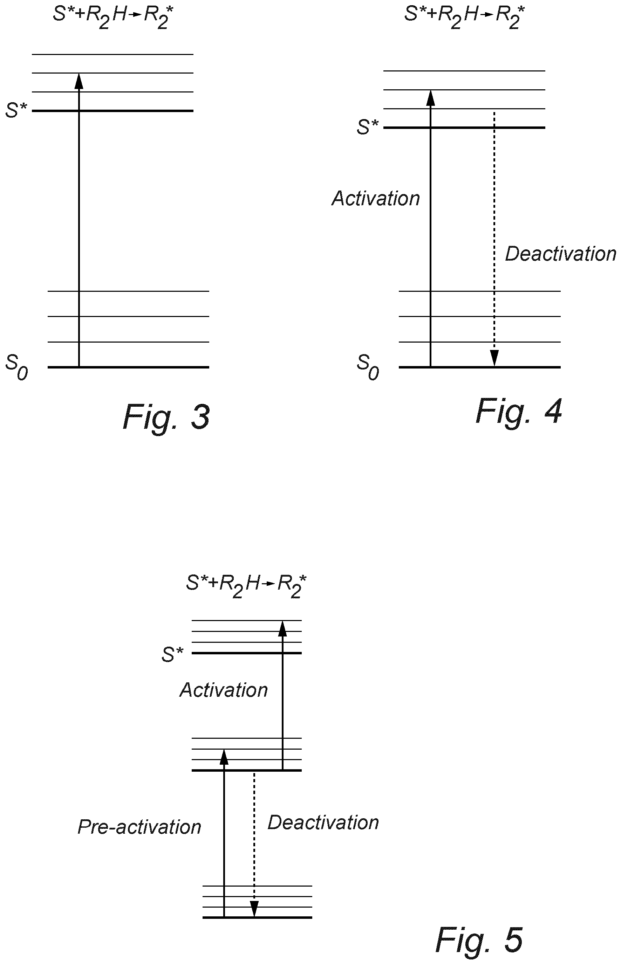

Referring now to Fig. 3, photo-induced formation of the object 10 using a first type of control of the forming of the object 10 is discussed.

As shown in Fig. 3, the formable material 12 may comprise a photo-initiator, which may initially be in a first energy state So, which may typically be a ground state of the photo-initiator. Fig. 3 illustrates electronic energy levels (thick lines) as well as vibrational energy levels of the photo-initiator.

The photo-initiator may thus be configured to absorb light of a wavelength corresponding to the energy between the first energy state S₀ and a second, higher energy state S*.

The photo-initiator may initiate solidifying of the formable material through electron transfer, proton transfer or energy transfer. The excitation of the photo-initiator into the higher energy state S* may cause a decomposition of a molecule into reactive species. The photo-initiator may for instance abstract a hydrogen atom from the molecule which will then form the reactive species. The reactive species may then combine with functional groups within the formable material 12, such as a monomer or an oligomer. For instance, free-radical polymerization may take place such that monomer species or oligomer species are bound together, whereby the formable material 12 can transition from a more liquid state to a more solid state.

The light used for bringing the photo-initiator to the higher energy state S* at which the excited photo-initiator may cause solidifying of the formable material 12 is referred to as activation light.

The apparatus 100 may control forming of the object 10 based only on use of the activation light, as illustrated in Fig. 3. The light field generator 110 may thus be configured to generate a three-dimensional light field defining a pattern of the activation light corresponding to the shape and size of the object 10 to be formed. The three-dimensional light field 140 may thus have a sufficient intensity for the formable material 12 to be solidified, in the locations that are to be part of the object 10, whereas the three-dimensional light field 140 may have a lower intensity in locations that are not to be part of the object 10, such that solidification may selectively occur within the formable material 12 for forming the object 10.

A required intensity causing the formable material 12 to solidify may relate to generation of a sufficient amount of reactive species in the location such that the material will solidify. This also further relates to a likelihood of the photo-initiator reacting with light. Thus, an activation threshold of intensity of light may be defined, such that the formable material 12 may only solidify in locations where the intensity of the three-dimensional light field 140 is above the activation threshold.

The three-dimensional light field 140 may be generated such that the intensity exceeds the activation threshold in the desired locations, whereas the intensity of the three-dimensional light field 140 is below the activation threshold in locations that are not to form part of the object 10.

It should be realized that it may be very difficult to provide high resolution in forming of the object using activation light only for controlling forming of the object. The use activation light only may be useful for providing fast formation of objects that do not require a very high resolution.

If the formable material 12 may provide an extremely nonlinear response to exposure of activation light such that the formable material 12 may solidify in locations receiving a light intensity above a threshold, while the formable material 12 not being solidified in locations receiving light intensity slightly below the threshold, the activation light may be used for accurately controlling the formation of the object 10.

However, the activation light may advantageously be combined with a control for ensuring a nonlinear response of the formable material 12 to the exposure of activation light. Thus, a three-dimensional control may be provided within the formable material, such as selectively inducing inhibition of a side reaction, such as oxygen poisoning.

Referring now to Fig. 4, photo-induced formation of the object 10 using a second type of control of the forming of the object 10 is discussed.

In addition to using activation light, as discussed above in relation to Fig. 3, the formation of the object 10 may also be controlled by using light to bring the photo-initiator from a higher energy state S* to a lower energy state S₀. By bringing the photo-initiator to the lower energy state S₀, the forming of reactive species that may cause the formable material 12 to solidify may be prevented.

The light used for bringing the photo-initiator to the lower energy state S₀ at which solidifying of the object 10 is inhibited is referred to as deactivation light. The deactivation light may stimulate emission of a photon by the photo-initiator being the higher energy state S*, so as to cause the photo-initiator to be brought to the lower energy state S₀. Alternatively, the deactivation light may cause the photo-initiator to be brought from the higher energy state S* to the lower energy state S₀ through a non-radiative process.

It should be realized that a wavelength (energy) of the activation light and deactivation light may differ. For instance, the activation light may bring the photo-initiator to a higher electronic or vibrational state than an electronic or vibrational state from which the photo-initiator is brought back to the lower energy state S₀ using deactivation light. Thus, the deactivation light may have a longer wavelength than activation light.

The deactivation light may be used in combination with the activation light to control locations within the formable material 12 being provided with sufficient energy to exceed the activation threshold. Thus, the deactivation light may ensure that locations in which the formable material 12 should not be solidified do not have an energy exceeding the activation threshold.

The deactivation light provides an improved control of forming of the object 10 such that use of deactivation light in combination with activation light provides a high resolution in controlling of forming of the object 10.

Referring now to Fig. 5, photo-induced formation of the object 10 using a third type of control of the forming of the object 10 is discussed.

As shown in Fig. 5, an intermediate energy state may be used. Thus, the photo-induced formation of the object 10 may involve illuminating the photo-initiator with light for bringing the photo-initiator from the lower energy state to the intermediate energy state. When the photo-initiator is in the intermediate energy state, the photo-initiator may further be able to absorb light that has a wavelength corresponding to bringing the photo-initiator from the intermediate energy state to the higher energy state at which the photo-initiator may cause forming of reactive species for initiating solidifying of the formable material 12.

Thus, the photo-initiator may only be able to absorb activation light if the photo-initiator has first been excited to the intermediate energy state. The light used for bringing the photo-initiator from the lower energy state to the intermediate energy state for preparing the photo-initiator for absorbing activation light is referred to as pre-activation light.

Hence, the use of pre-activation light may further control locations in which the formable material 12 will solidify. The pre-activation light and activation light may further be combined with use of deactivation light as illustrated in Fig. 5, which may further control locations in which the formable material 12 will solidify. The deactivation light may be used for stimulating emission of a photon for causing the photo-initiator to be brought from the intermediate energy state back to the lower energy state in which the photo-initiator will not be able to absorb the activation light.

The use of pre-activation light and/or deactivation light in combination with activation light provides a high resolution in controlling of forming of the object 10.

It should be realized that the formable material 12 may be exposed to the activation light described above and may further be exposed to the deactivation light or the pre-activation light as described above. The three-dimensional light field 140 may be used for providing the activation light, the deactivation light and/or the pre-activation light as described above. Thus, the distribution of the three-dimensional light field 140 may be used for controlling activation of the photo-initiator or for inhibiting activation of the photo-initiator.

The apparatus 100 may be configured to provide a pattern by the three-dimensional light field 140 for only one of the activation light, the deactivation light and the pre-activation light. If more than one of the activation light, the deactivation light and the pre-activation light is to be used, the three-dimensional light field 140 may be complemented by a blanket of light that provides a common intensity throughout the volume of the formable material 12. Thus, only one type of light may be patterned for controlling the size and shape of the object 10.

However, the apparatus 100 may comprise an additional three-dimensional light field generator 116 configured to receive an additional light beam incident on the additional light field generator 116 and to form an additional three-dimensional light field based on diffraction of the incident additional light beam. The additional light field generator 116 may thus be configured to output the additional three-dimensional light field into the formable material 12. This may be used for providing more than one type of light being patterned, such that for instance both the activation light and the deactivation light may be provided as three-dimensional light fields.

The additional light field generator 116 may be formed in a same manner as described above for the light field generator 110. However, the additional light field generator 116 may receive an incident light beam of a different wavelength if the light field generators 110 and 116 are to be used for outputting different types of light.

It should be realized that the apparatus 100 may comprise three different light field generators for providing three-dimensional light fields of the activation light, the deactivation light, and the pre-activation light. However, it should be realized that the apparatus 100 may be configured to provide output of patterned three-dimensional light fields of the activation light, the deactivation light, and the pre-activation light using a single light field generator 110 by the light field generator 110 being configured to sequentially receive incident light beams for pre-activation light, deactivation light and activation light and being dynamically controlled for forming the desired three-dimensional light fields.

It should further be realized that the three-dimensional light field 140 based on a pattern formed by the light field generator 110 may be combined with a pattern of light formed in a simple manner. Thus, the three-dimensional light field 140 may be used for only one of the activation light, the deactivation light and the pre-activation light. The apparatus 100 may further comprise a simple light modulator, such as a light scattering element or a light mask, which may be configured to form a regular pattern of light within the formable material.

It should also be realized that the object 10 to be formed may be defined using a three-dimensional representation of the object 10. The representation of the object 10 may be defined by a three-dimensional matrix of equally sized units, which may each define whether the respective unit is to form part of the object 10 or not. The size of the units may correspond to the resolution of the object 10 and each unit may be referred to as a voxel.

However, it should be realized that, having a very high resolution of the object 10 also implies that a digital representation of the object 10 may require a large amount of data if represented by small size voxels. Thus, according to an alternative, the object 10 may be represented by a combination of other types of volumetric units, for instance defining bars within a three-dimensional volume.

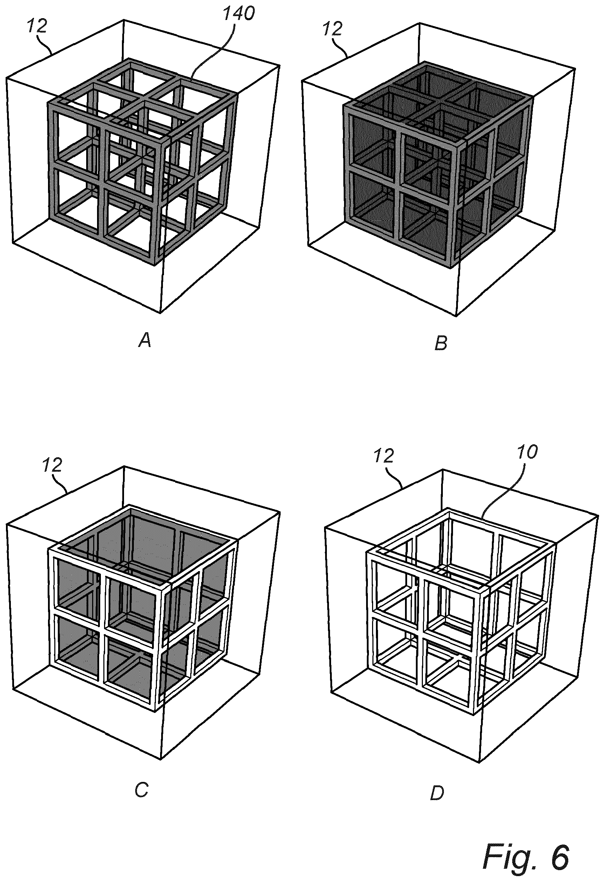

For instance, as illustrated in Fig. 6, activation light may be provided to define the pattern of the three-dimensional light field 140 within the formable material 12. The three-dimensional light field 140 illustrated in Fig. 6 may be defined using volumetric units in form of bars, which may be an efficient manner of representing the three-dimensional light field 140 to be formed using a small amount of data.

As indicated in part A of Fig. 6, the three-dimensional light field 140 may selectively bring photo-initiator in desired locations within the three-dimensional light field to the activated state in which the formable material 12 may solidify. High local intensities of the three-dimensional light field are indicated in dark shading in part A of Fig. 6.

As indicated in part B of Fig. 6, deactivation light may be used for preventing the formable material 12 from solidifying within a region of the formable material 12. This deactivation light need not be patterned but may for instance be formed by passing through a simple light mask to ensure that the deactivation light ensures that the formable material 12 will not solidify in a region of the formable material 12. The deactivation light in the formable material is indicated in light shading in part B of Fig. 6.

As further illustrated in part C of Fig. 6, the formable material 12 may solidify to form the object 10 based on the locations in which the activation threshold is exceeded. These locations may be defined based on shapes of light of activation light, deactivation light and/or preactivation light within the formable material 12. The activation light and deactivation light illustrated in parts A and B of Fig. 6 may form a resulting shape of locations in which the activation threshold is exceeded, wherein the structure of the locations in which the activation threshold is exceeded is indicated in Fig. 6 and the shading indicates locations in which the deactivation light ensures that the activation threshold is not exceeded.

As further illustrated in part D of Fig. 6, the three-dimensional light field 140 of activation light in combination with the deactivation light formed by a simple light mask may thus be used for forming the object 10.

The local intensity of activation light, deactivation light and/or pre-activation light in each location in the formable material 12 may thus be provided such that the formable material 12 solidifies in desired locations and the desired object 10 is formed. The light field generator(s) may be controlled so as to adapt the three-dimensional light field to the object 10 to be formed.

The deactivation light may be used for preventing undesired formation of artifacts in the formable material 12 due to activation light (and/or pre-activation light) passing or scattering through a part of the formable material 12 that is not intended to be solidified. For instance, if the three-dimensional light field for activating the formable material is converging into a focus point, a background signal may be defined in other parts of the formable material 12 that are not to be solidified. The deactivation light may be set such that a background signal does not cause the formable material 12 to solidify. Thus, if energy of the background signal is 30% of the energy in locations at which the formable material is to solidify, the deactivation light may be set to correspond to the 30% background signal.

However, light propagating through the formable material 12 may attenuate, e.g., due to absorption, while propagating through the formable material 12. Thus, the formable material 12 may be exposed to lower intensity of light in locations far into the formable material 12. The deactivation light may be used for ensuring that an effective exposure rate of light for causing the formable material 12 to solidify is similar throughout the volume of the formable material 12. Thanks to using an intensity gradient of the deactivation light with a decreasing intensity along the direction of propagation of light, the apparatus 100 may ensure that the object 10 may be formed with a common effective dose of the activation light throughout the formable material 12, in particular, in locations extending far into the formable material 12 as seen from the light field generator 110.

It should be realized that exposure of the formable material 12 by the three-dimensional light field 140 may require corrections, by additional light fields or by complex computations for controlling the formation of the three-dimensional light field 140, to ensure that the desired object 10 is formed. Thanks to the intensity gradient of the deactivation light, it may be ensured that a common effective dose is provided so as to reduce complexity in controlling the object 10 to be formed. This implies that a need for complex corrections of the patterned three-dimensional light field 140 of activation light may be avoided.

It should also be realized that the apparatus 100 may be configured to output multiple three-dimensional light fields of the same wavelength into the formable material 12. This may be used for preventing undesired formation of artifacts in the formable material 12. For instance, the multiple three-dimensional light fields may be output from different positions in relation to the container 130 and the formable material 12 therein. Thus, the formation of the object 10 may be controlled by a combined effect of the three-dimensional light fields. This may allow the object 10 to be defined with a higher signal-to-noise ratio.

Alternatively, the multiple three-dimensional light fields may be sequentially output from the same light field generator 110. However, the light field generator 110 may be controlled to provide different background levels in the different exposures. This may also allow the object 10 to be defined with a higher signal-to-noise ratio.

In some embodiments, a single wavelength of light is used for controlling forming of the object 10. The single wavelength of light may thus be activation light and may form a three-dimensional light field 140 in the formable material. The forming of the object 10 using the single wavelength of light may be useful when a single exposure is used for forming the entire object 10.

In other embodiments, two wavelengths of light are used for controlling forming of the object 10. A first wavelength of light may form activation light and a second wavelength of light may form deactivation light. The deactivation light may be formed such that deactivation light is provided in the locations at which the formable material should not solidify but which receives some activation light. Depending on the desired shape of the object 10 to be formed, both the activation light and the deactivation light may form three-dimensional light fields in the formable material 12 using one or more light field generators 110, 116. However, if a fairly simple shape of the object 10 is desired, only one of the activation light or the deactivation light may form a three-dimensional light field in the formable material 12.

In yet other embodiments, three wavelengths of light are used for controlling forming of the object 10. A first wavelength of light may form activation light, a second wavelength of light may form deactivation light, and a third wavelength of light may form pre-activation light. Again, depending on the desired shape of the object 10, one or more of the activation light, deactivation light and pre-activation light may form a three-dimensional light field in the formable material 12. The deactivation light may be provided in locations at which the formable material 12 should not solidify but which receives some activation light and/or pre-activation light.

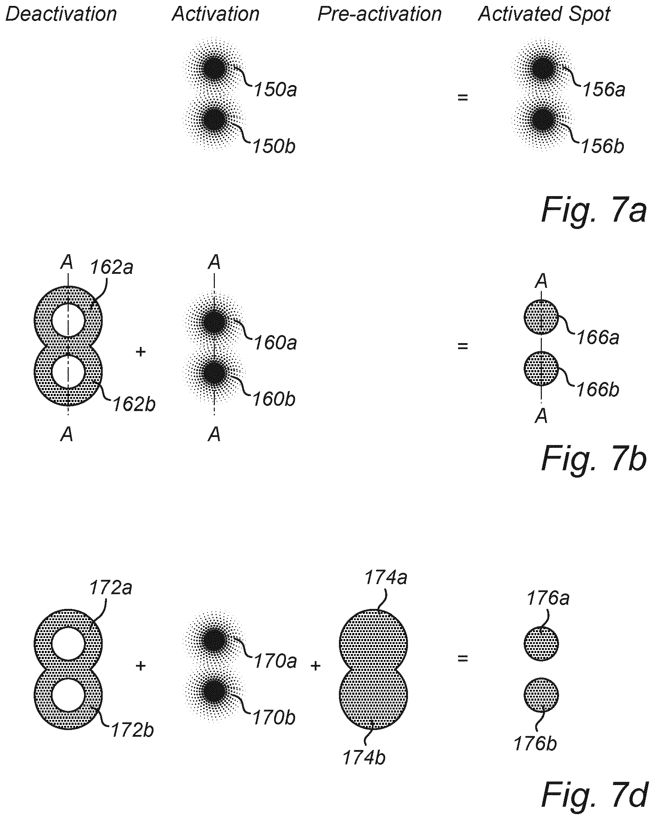

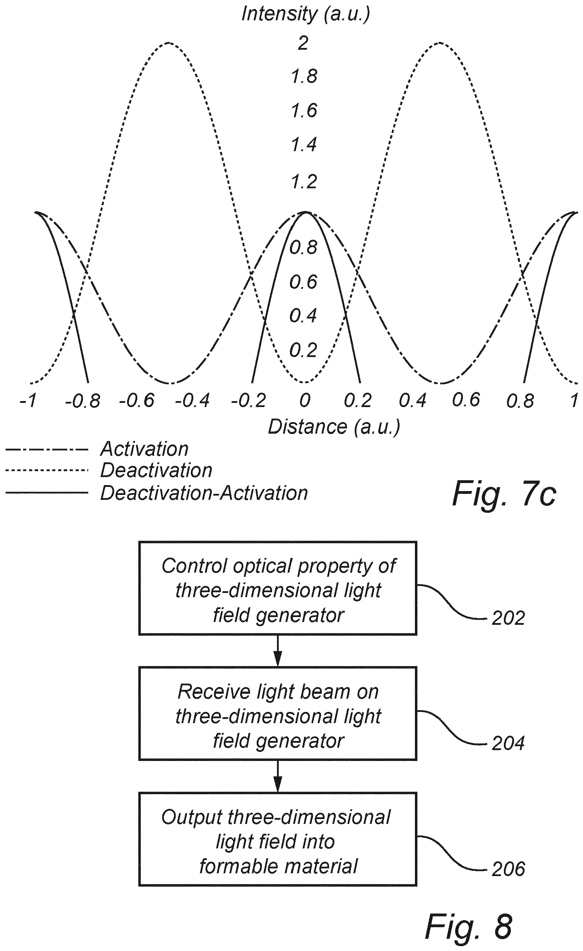

Referring now to Fig. 7, use of multiple exposures for achieving super-resolution in formation of the object will be discussed.

It should be realized that the apparatus 100 may be configured to define the size and shape of the object as a combination of activation light, deactivation light and/or pre-activation light. This may allow achieving a resolution of the object that may be higher than resolution of individual light fields of the activation light, deactivation light and/or pre-activation light, respectively.

Also or alternatively, one type of light, may be provided as a combination of light fields in order to provide a super-resolution. For instance, the activation light of the three-dimensional light field 140 may be combined with an exposure by a second light field of activation light, wherein the second light field of activation light may have a simple or complex shape and may for instance be defined by a light modulator.

Figs 7a-d illustrate a super-resolution achieved by combining activation light and deactivation light. In Fig. 7a, two adjacent focus points 150a, 150b of activation light are illustrated. As indicated in Fig. 7a, the activation light may have an intensity around a peak such that intensity profiles of adjacent focus points 150a, 150b overlap. This implies that the activation light indicated in Fig. 7a may not be able to control formation of two separate resulting spots 156a, 156b in the formable material. Rather, the resulting spots 156a, 156b overlap.

In Fig. 7b, two adjacent focus points 160a, 160b of activation light are illustrated. However, in this case, deactivation light is also used, wherein the deactivation light is focused to form two adjacent peaks 162a, 162b of intensity profiles around the intensity peaks of the focus points 160a, 160b of activation light. The apparatus 100 may be configured to provide the focus points 160a, 160b of activation light to be formed in a common location with the peaks 162a, 162b of deactivation light. The overlap of the deactivation light and activation light implies that formation of two separate resulting spots 166a, 166b within the formable material 12 may be achieved.

In Fig. 7c, an intensity profile of light is illustrated along cross-section A-A indicated in the points 160a, 160b and 162a, 162b. The intensity profile of activation light is indicated by a dash-dotted line and the intensity profile of the deactivation light is indicated by a dashed line. In addition, the intensity profile of a subtraction of activation light from deactivation light is indicated by a solid line. As can be seen in Fig. 7c, the profile of the difference (subtraction of activation light from deactivation light) has a sharper peak than the profile of the activation light. This implies that super-resolution of forming the object 10 may be provided as an improved resolution over using activation light only is provided.

Thus, the deactivation light may act to prevent the formable material 12 to solidify around a peak intensity of the activation light. This implies that the combination of deactivation light and activation light may be used for improving the resolution of forming the object 10 compared to only using activation light. The focus points 160a, 160b of the activation light are relatively large. However, the intensity profile of the deactivation light may ensure that the formable material 12 will only solidify in a central part of each of the focus points 160a, 160b of the activation light. Thus, a sharp definition of the resulting points 166a, 166b may be provided, such that the resulting point 154 may be defined with a super-resolution that is larger than the resolution of the activation light only.

It should be realized that increasing intensity of the deactivation light increases an area in which the deactivation light is sufficiently strong to prevent the formable material 12 to be solidified based on the activation light. With a high intensity of deactivation light, the intensity profile of deactivation light indicated in Fig. 7c has higher peaks and may also have broader peaks. This implies that the activation light may only cause the formable material 12 to be solidified in a small point 166a, 166b around the peak of the intensity profile of the activation light. Thus, a very high resolution in defining points 166a, 166b to be solidified in the formable material 12 may be provided and may be controlled by intensity of deactivation light.

It should further be realized that a possibility to define very small, resolvable points 166a, 166b in the formable material 12 facilitates formation of an object 10 with very high resolution. The object 10 may be defined by stitching or interleaving patterns together to image a higher density of distinct features in the object 10 using multiple exposures.

In Fig. 7d, use of pre-activation light is also illustrated. Thus, like Fig. 7b, Fig. 7d illustrates two adjacent focus points 170a, 170b of activation light. Further, the deactivation light is focused to form two adjacent peaks 172a, 172b of intensity profiles around the intensity peaks of the focus points 170a, 170b of activation light. In addition, pre-activation light is used providing two adjacent focus points 174a, 174b. The apparatus 100 may be configured to provide the focus points 170a, 170b of activation light to be formed in a common location with the peaks 172a, 172b of deactivation light and the focus points 174a, 174b of pre-activation light. The overlap of the deactivation light, activation light and pre-activation light implies that formation of two separate resulting spots 176a, 176b within the formable material 12 may be achieved.

Thus, according to an embodiment, forming of an object 10 with a very high resolution may be achieved using activation light and deactivation light so as to define resolution of the object 10 based on control by both the activation light and deactivation light.

The forming of the object 10 may thus involve initially exposing an entire portion of the formable material 12 with deactivation light to set the photo-initiator in the formable material 12 to a non-excited state. The forming of the object 10 may further involve exposing the formable material 12 to a three-dimensional light field 140 of pre-activation light. The forming of the object 10 may further involve exposing the formable material 12 to patterned deactivation light controlling background signals. The forming of the object 10 may then further involve exposing the formable material 12 to activation light, which may also be defined as a patterned three-dimensional light field, for causing the formable material 12 to solidify in desired locations.

The above steps may be repeated in several portions of the formable material 12 for building up a total object.

The object 10 being formed may be formed with a high degree of freedom. Since the apparatus 100 allows the object 10 to be defined in three dimensions simultaneously, the object 10 needs not be defined in relation to any supporting structure for holding parts of the object 10 while the object 10 is being formed (as opposed to limitations that may be present if the object 10 is formed layer-by-layer).

Thus, the apparatus 100 may be used for forming objects 10 with complex shapes and may for instance be used for forming object 10 with detached parts (such as a sphere within a sphere).

In addition, the apparatus 100 allows formation of an object 10 with very high resolution, wherein the object is formed with a resolution smaller than 1 mm, such as smaller than 100 µm , such as smaller than 10 µm, such as smaller than 1 µm, such as smaller than 50 nm.

It should further be realized that the resolution of the object 10 may even be better than a resolution of a single three-dimensional light field. For instance, activation light, deactivation light and/or pre-activation light may be combined such that an overlap of light patterns define the resolution of the object 10.

Referring now to Fig. 8, a method for controlling volumetric forming of an object will be described.

The method comprises controlling 202 an optical property of a controllable three-dimensional light field generator. For instance, the optical property of each individually addressable element of an array of individually addressable elements may be controlled. Thus, an overall effect of the light field generator on an incident light beam may be controlled.

The method further comprises receiving 204 a light beam on the light field generator to form a three-dimensional light field based on diffraction of the incident light beam. The three-dimensional light field is thus controlled based on the optical property of the light field generator.

The method further comprises outputting 206 the three-dimensional light field into a formable material such that a distribution of the three-dimensional light field controls photo-induced formation of the object simultaneously in three dimensions within the formable material.

As mentioned above, the three-dimensional light field may be used for providing a distribution of activation light, deactivation light or pre-activation light. The method may further comprise outputting three-dimensional light fields of further types of light.

Thus, the method may comprise outputting three-dimensional light fields of activation light, deactivation light and/or pre-activation light. The method may further comprise controlling the optical property of plural controllable three-dimensional light field generator for controlling output of plural three-dimensional light fields.

The method may involve exposing the formable material to light such that the object is formed, wherein the formable material is exposed to activation light, possibly in combination with deactivation light and/or pre-activation light and wherein at least one of the activation light, deactivation light and the pre-activation light is output as a three-dimensional light field formed by a light field generator.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An apparatus (100) for volumetric forming of an object (10), said apparatus (100) comprising:
a controllable three-dimensional light field generator (110), wherein the light field generator (110) is configured to receive a light beam incident on the light field generator (110) and to form a three-dimensional light field based on diffraction of the incident light beam, wherein the light field generator (110) is controllable for dynamically changing an optical property of the light field generator (110) for dynamically changing a distribution of the three-dimensional light field;
a container (130) for holding a formable material (12), wherein the light field generator (110) is configured to output the three-dimensional light field into the container (130) such that the distribution of the three-dimensional light field controls photo-induced formation of the object (10) simultaneously in three dimensions within the formable material;
wherein the light field generator (110) is controllable for controlling local intensity of the three-dimensional light field in the formable material (12) so as to control a size and shape of the object (10) to be formed in three dimensions by exposure to the three-dimensional light field.

2. The apparatus according to claim 1, wherein the light field generator (110) comprises an array of individually addressable elements (112), wherein each element (112) is smaller than a wavelength, such as smaller than half of a wavelength, of the incident light beam, and wherein each element (112) is controllable for controlling an optical property of the element (112).

3. The apparatus according to claim 2, wherein each element (112) is controllable for controlling a modulation of amplitude, phase and/or polarization of the incident light beam by the element (112).

4. The apparatus according to any one of the preceding claims, further comprising an additional controllable three-dimensional light field generator (116) configured to receive an additional light beam incident on the additional light field generator (116) and to form an additional three-dimensional light field based on diffraction of the incident additional light beam, wherein the additional light field generator (116) is controllable for dynamically changing an optical property of the additional light field generator (116) for dynamically changing a distribution of the additional three-dimensional light field; wherein the additional light field generator (116) is configured to output the additional three-dimensional light field into the container (130), wherein the three-dimensional light field and the additional three-dimensional light field together control photo-induced formation of the object (10).

5. The apparatus according to any one of the preceding claims, wherein the light field generator (110) is configured to output a three-dimensional light field of deactivation light providing a three-dimensional distribution of the deactivation light for causing local inhibition of forming of the object in the formable material (12), wherein the light field generator (110) is configured to output the three-dimensional light field providing three-dimensional distribution of deactivation energy, wherein the distribution of deactivation energy comprises an intensity gradient defining a decreasing intensity along a direction of propagation of light from the light field generator (110).

6. The apparatus according to claim 5, wherein the apparatus (100) is further configured to output activation light,, wherein deactivation light comprises a first wavelength and activation light comprises a second wavelength different from the first wavelength, wherein the apparatus (100) is configured to output a three-dimensional light field of activation light into the container (130) providing a three-dimensional distribution of activation energy to the formable material (12), wherein the activation light is configured to cause a photo-activator to react with the activation light for further provoking or modifying a chemical reaction causing formation of the object (10) in the formable material (12).

7. The apparatus according to claim 6, wherein the apparatus (100) is further configured to output pre-activation light, wherein pre-activation light comprises a third wavelength different from the first and second wavelength, wherein the apparatus (100) is configured to output a three-dimensional light field of pre-activation light into the container (130) providing a three-dimensional distribution of pre-activation energy to the formable material (12), wherein the pre-activation light is configured to cause pre-activation of the photo-activator in the formable material (12) to allow the photo-activator to absorb activation light for causing photo-induced formation of the object (10) in the formable material (12).

8. The apparatus according to any one of the preceding claims, wherein the light field generator (110) is configured to output a time-varying three-dimensional light field during exposure of the formable material to the three-dimensional light field.

9. The apparatus according to any one of the preceding claims, wherein the light field generator (110) is configured to output a plurality of exposures of the three-dimensional light field into the container (130), wherein the three-dimensional light fields of different exposures all define a same distribution corresponding to the shape and size of the object (10) to be formed, wherein the three-dimensional light fields of different exposures define different background levels.

10. The apparatus according to any one of the preceding claims, wherein the distribution of the three-dimensional light field has a resolution allowing forming of the object (10) with a resolution smaller than 1 mm, such as smaller than 100 µm, such as smaller than 10 µm, such as smaller than 1 µm, such as smaller than 50 nm.

11. The apparatus according to any one of the preceding claims, further comprising a light source (120) for forming the light beam incident on the light field generator (110).

12. The apparatus according to any one of the preceding claims, wherein the distribution of the three-dimensional light field controls photo-induced formation of the object (10) by causing the formable material (12) to form a solid object by polymerization, such as cross linking of monomers.

13. A method for controlling volumetric forming of an object, said method comprising:
controlling (202) an optical property of a controllable three-dimensional light field generator;
receiving (204) a light beam on the light field generator to form a three-dimensional light field based on diffraction of the incident light beam;
outputting (206) the three-dimensional light field into a formable material such that a distribution of the three-dimensional light field controls photo-induced formation of the object simultaneously in three dimensions within the formable material.

14. The method according to claim 13, wherein the outputted three-dimensional light field is formed by deactivation light providing a three-dimensional distribution of deactivation energy to the formable material, wherein an energy needed to cause the formable material to be solidified at a location in the formable material is increased by the deactivation energy provided by the three-dimensional light field of deactivation light in the location, wherein the method further comprises outputting a three-dimensional light field of activation light into the formable material providing a three-dimensional distribution of activation energy to the formable material, wherein the activation light is configured to cause photo-induced formation of the object in the formable material, wherein deactivation light comprises a first wavelength and activation light comprises a second wavelength different from the first wavelength.

15. The method according to claim 14, wherein the method further comprises outputting a three-dimensional light field of pre-activation light into the formable material providing a three-dimensional distribution of pre-activation energy to the formable material, wherein the pre-activation light is configured to cause pre-activation of the formable material for allowing activation light to be absorbed to cause photo-induced formation of the object in the formable material, wherein pre-activation light comprises a third wavelength, different from the first and second wavelengths.
